# EUROPÄISCHE PATENTANMELDUNG

(11) **EP 1 959 360 A1**
(43) Veröffentlichungstag der Anmeldung: **20.08.2008**
(21) Anmeldenummer: 07102341.0
(22) Anmeldetag: 14.02.2007
(51) Int. Cl.: G06F 17/30

(54) **Verfahren zum Archivieren elektronischer Daten in einer Multimediadaten-Anwendung, computerlesbares Speichermedium und Datenverarbeitungssystem zum Verarbeiten von Multimediadaten**

(71) Anmelder: Deutsche Thomson OHG, 30625 Hannover (DE)
(72) Erfinder: Aust, Andreas, 30177, Hannover (DE); Gläser, Frank, 30163, Hannover (DE)
(74) Vertreter: Schäferjohann, Volker

(57) **Zusammenfassung**

Die Erfindung betrifft eine Technologie zum Archivieren elektronischer Daten in einer Multimediadaten-Anwendung. Bei einem Verfahren zum Archivieren elektronischer Daten in einer Multimediadaten-Anwendung werden computerlesbare Virtualisierungsdaten, die einen beim Erzeugen von bearbeiteten Multimediadaten aus Multimedia-Rohdaten genutzten Multimediadaten-Verarbeitungsprozess virtuell abbilden, bereitgestellt und auf einem Speichermedium mittels Speichern archiviert werden, wobei die computerlesbare Virtualisierungsdaten konfiguriert sind, beim Laden von dem Speichermedium in eine Betriebssystemumgebung einer Datenverarbeitungseinrichtung im Rahmen einer in der Betriebssystemumgebung lauffähigen Applikation die folgenden Schritte auszuführen: Empfangen der Multimedia-Rohdaten, Verarbeiten der empfangenen Multimedia-Rohdaten gemäß dem Multimediadaten-Verarbeitungsprozess zu den bearbeiteten Multimediadaten entsprechenden Multimediadaten und Bereitstellen der entsprechenden Multimediadaten. Weiterhin sind ein computerlesbares Speichermedium und eine Datenverarbeitungseinrichtung vorgesehen.

## Beschreibung

Die Erfindung bezieht sich auf ein Verfahren zum Archivieren elektronischer Daten in einer Multimediadaten-Anwendung, ein computerlesbares Speichermedium sowie ein Datenverarbeitungssystem zum Bearbeiten von Multimediadaten.

### Stand der Technik

In Verbindung mit verschiedenen Anwendungen werden vorhandene Multimediadaten, seien sie in der vorhandenen Form erzeugt oder mittels Bearbeitung so entstanden, in nachgeschalteten Verarbeitungsprozessen verändert. Typisch für derartige Bearbeitungsprozesse ist, dass Multimedia-Rohdaten, die als Ausgangsdaten des Verarbeitungsprozesses dienen, mittels eines Bearbeitungsschrittes oder einer Folge von Bearbeitungsschritten zu bearbeiteten Multimediadaten verändert werden, die im Zusammenhang mit diesem Bearbeitungsprozess Enddaten oder eine Endversion darstellen.

So ist es beispielsweise üblich, dass in Verbindung mit einem gespielten Musikstück aufgenommene Audiodaten in einem nachträglichen Bearbeitungsprozess verändert werden, zum Beispiel mit dem Zweck, weitere Klangelemente einzumischen oder vorhandene Klangelemente zu verstärken. Die in digitaler Form vorliegenden Audiodaten können mit hierfür geeigneten Geräten bearbeitet werden.

In ähnlicher Weise ist es bekannt, in digitaler Form vorliegende Videodaten von Filmaufnahmen in nachträglichen Bearbeitungsprozessen zu verändern. Solche Videodaten werden beispielsweise mit einer digitalen Kamera aufgenommen. Die ursprünglich aufgenommenen Videodaten bilden ein Rohmaterial von Multimedia-Rohdaten, die anschließend bearbeitet werden, wozu zum Beispiel das Schneiden und das Zusammenmischen von verschiedenen Filmsequenzen gehören. Für diesen Bearbeitungsprozess stehen heute verschiedenste Videobearbeitungsmittel zur Verfügung, bei denen es sich häufig um Software-Applikationen handelt, die auf einer Datenverarbeitungseinrichtung installiert sind, beispielsweise einem Personalcomputer oder einer Workstation. Mit Hilfe der Software-Applikationen können die ursprünglichen Videodaten bearbeitet werden. Verschiedene Applikationen können über Datenverarbeitungsanlagen verteilt sein, die ihrerseits als Teil eines Netzwerkes gebildet sind. Zum Bearbeiten von Videodaten kann Beispielsweise auch das einmischen von Audiosequenzen gehören.

Die mit Hilfe des nachträglichen Bearbeitungsprozesses geschaffenen, bearbeiteten Multimediadaten werden dann mittels Speichern auf einem geeigneten elektronischen Speichermedium als computerlesbare Multimediadaten archiviert, um sie für eine zukünftige Auswertung aufzubewahren. Bei der in der Zukunft liegenden Auswertung tritt dann häufig das Problem auf, dass sich zum Beispiel die für den Bearbeitungsprozess genutzten Software-Applikationen fortentwickelt haben, wobei es auch vorkommt, dass die für den in der Vergangenheit ausgeführten Bearbeitungsprozess genutzten Applikationen nicht mehr zur Verfügung stehen, sei es nur wegen geänderter Datenformate. Dieses ist insbesondere eine Folge des schnellen Wechsels von Software-Applikationen und der hiermit jeweils verbundenen Datenformate. Es ist dann schwierig, die archivierten Multimediadaten in geeigneter Weise auszuwerten. Auch kann es sein, dass die ursprünglich in dem Bearbeitungsprozess genutzte Hardware zum Teil nicht mehr zur Verfügung steht.

### Erfindung

Aufgabe der Erfindung ist es, eine verbesserte Technologie zum Archivieren elektronischer Daten in einer Multimediadaten-Anwendung zu schaffen, bei der Probleme der datentechnischen Auswertbarkeit archivierter Multimediadaten vermieden sind. Ziel ist es insbesondere, im Rahmen der verbesserten Technologie ein Verfahren zum Archivieren elektronischer Daten in einer Multimediadaten-Anwendung sowie ein bei dem Verfahren nutzbares Datenverarbeitungssystem und ein bei dem Verfahren nutzbares, computerlesbares Speichermedium anzugeben.

Nach einem Aspekt der Erfindung ist ein Verfahren zum Archivieren elektronischer Daten in einer Multimediadaten-Anwendung geschaffen, bei dem computerlesbare Virtualisierungsdaten, die einen beim Erzeugen von bearbeiteten Multimediadaten aus Multimedia-Rohdaten genutzten Multimediadaten-Verarbeitungsprozess virtuell abbilden, bereitgestellt werden und die computerlesbaren Virtualisierungsdaten auf einem Speichermedium mittels Speichern archiviert werden, wobei die computerlesbare Virtualisierungsdaten konfiguriert sind, beim Laden von dem Speichermedium in eine Betriebssystemumgebung einer Datenverarbeitungseinrichtung im Rahmen einer in der Betriebssystemumgebung lauffähigen Applikation die folgenden Schritte auszuführen: Empfangen der Multimedia-Rohdaten, Verarbeiten der empfangenen Multimedia-Rohdaten gemäß dem Multimediadaten-Verarbeitungsprozess zu den bearbeiteten Multimediadaten entsprechenden Multimediadaten und Bereitstellen der entsprechenden Multimediadaten.

Nach einem weiteren Aspekt der Erfindung ist ein computerlesbares Speichermedium mit hierauf gespeicherten, einen beim Erzeugen von bearbeiteten Multimediadaten aus Multimedia-Rohdaten genutzten Multimediadaten-Verarbeitungsprozess virtuell abbildenden, computerlesbaren Virtualisierungsdaten geschaffen, die konfiguriert sind, beim Laden in eine Betriebssystemumgebung einer Datenverarbeitungseinrichtung im Rahmen einer in der Betriebssystemumgebung lauffähigen Applikation die folgenden Schritte auszuführen: Empfangen der Multimedia-Rohdaten, Verarbeiten der empfangenen Multimedia-Rohdaten zu den bearbeiteten Multimediadaten entsprechenden Multimediadaten und Bereitstellen der entsprechenden Multimediadaten.

Weiterhin ist nach einem Aspekt der Erfindung ein Datenverarbeitungssystem zum Bearbeiten von Multimediadaten mit einer in einer implementierten Betriebssystemumgebung lauffähig installierten Applikation geschaffen, die konfiguriert ist, nach dem Laden von computerlesbaren Virtualisierungsdaten, welche einen beim Erzeugen von bearbeiteten Multimediadaten aus Multimedia-Rohdaten genutzten Multimediadaten-Verarbeitungsprozess virtuell abbildend ausgeführt sind, die Multimedia-Rohdaten zu empfangen und den computerlesbaren Virtualisierungsdaten entsprechend zu den bearbeiteten Multimediadaten zu verarbeiten.

Die vorgeschlagene Technologie zum Archivieren elektronischer Daten in einer Multimediadaten-Anwendung umfasst den Gedanken, den Multimediadaten-Verarbeitungsprozess, welcher beim Erzeugen von bearbeiteten Multimediadaten aus Multimedia-Rohdaten genutzt wird, virtuell mittels computerlesbarer Virtualisierungsdaten abzubilden, was auch als virtuelles Nachbilden bezeichnet werden kann, und die computerlesbaren Virtualisierungsdaten zu archivieren, so dass diese bei einer später vorgesehenen datentechnischen Auswertung der bearbeiteten Multimediadaten zur Verfügung stehen. Mit Hilfe der computerlesbaren Virtualisierungsdaten kann der ursprünglich genutzte Multimediadaten-Verarbeitungsprozess insbesondere sowohl nachverfolgt als auch erneut ausgeführt werden, selbst wenn die für den ursprünglichen Verarbeitungsprozess genutzten, datentechnischen Komponenten, die Hardwareelemente und Softwareelemente umfassen können, nicht mehr zur Verfügung stehen. Hierzu ist es notwendig, dass die computerlesbaren Virtualisierungsdaten in einer Applikation, die in einer dann aktuell genutzten Betriebssystemumgebung lauffähig installiert ist, ausgeführt werden können. Mittels dieser Ausführung wird der ursprünglich genutzte Multimediadaten-Verarbeitungsprozess in der aktuellen Betriebssystemumgebung nachgebildet, was sowohl eine Auswertung einzelner Schritte des ursprünglichen Multimediadaten-Verarbeitungsprozesses als auch einen Vollzug des gesamten, ursprünglichen Multimediadaten-Verarbeitungsprozesses ermöglicht, so dass die Multimedia-Rohdaten erneut zu den bearbeiteten Multimediadaten verarbeitet werden können, auch wenn die ursprünglich genutzten, datentechnischen Verarbeitungskomponenten gar nicht mehr zur Verfügung stehen. Sie sind aber virtuell abgebildet und mittels der computerlesbaren Virtualisierungsdaten datentechnisch rekonstruierbar.

Mit Hilfe der vorgeschlagenen Technik sind die bei der bekannten Archivierung von Multimediadaten auftretenden Probleme hinsichtlich einer teilweisen oder sogar vollständigen Nicht-Auswertbarkeit von archivierten Multimediadaten vermieden. Aufgrund der virtuellen Abbildung des für die Bearbeitung der Multimedia-Rohdaten genutzten Multimediadaten-Verarbeitungsprozesses, einschließlich der hierfür genutzten Hardware- und Software-Komponenten, ist es bei der späteren Auswertung der archivierten Multimediadaten nicht notwendig, dass die für den ursprünglichen Bearbeitungsprozess genutzten Komponenten immer noch vorliegen. Voraussetzung ist, dass die computerlesbaren Virtualisierungsdaten in der aktuellen Betriebssystemumgebung auf der Datenverarbeitungseinrichtung ausgewertet werden können. Übliche Betriebssysteme für Datenverarbeitungsanlagen stellen jedoch die Funktionalität einer Lauffähigkeit auch anderer Betriebssysteme, seien es ältere Betriebssysteme oder aktuelle andere Betriebssysteme, im Rahmen bestimmter Applikationen üblicherweise zur Verfügung.

Eine bevorzugte Weiterbildung der Erfindung sieht vor, dass die bereitgestellten, computerlesbaren Virtualisierungsdaten vor dem archivierenden Speichern geprüft werden, indem die computerlesbaren Virtualisierungsdaten in eine Betriebssystemumgebung einer prüfenden Datenverarbeitungseinrichtung geladen werden und in der prüfenden Datenverarbeitungseinrichtung mittels eines den geladenen Virtualisierungsdaten entsprechenden Multimediadaten-Verarbeitungsprozesses den Multimedia-Rohdaten gleichende Multimedia-Prüfrohdaten verarbeitet werden zu Prüfmultimediadaten und die Prüfmultimediadaten mit den bearbeiteten Multimediadaten verglichen werden. Auf diese Weise wird die korrekte Virtualisierung des zur Bearbeitung der Multimedia-Rohdaten genutzten Multimediadaten-Verarbeitungsprozesses geprüft, was bevorzugt vor der tatsächlichen Archivierung der computerlesbaren Virtualisierungsdaten ausgeführt wird. Ein Vergleich der bearbeiteten Multimediadaten, die unter Verwendung der computerlesbaren Virtualisierungsdaten erzeugt wurden, mit den bearbeiteten Multimediadaten, die im Rahmen des tatsächlichen, realen Multimediadaten-Verarbeitungsprozesses entstanden sind, zeigt, ob die computerlesbaren Virtualisierungsdaten tatsächlich zum gleichen Ergebnis führen. Sollte es Abweichungen geben, kann die virtuelle Abbildung des Multimediadaten-Verarbeitungsprozesses in die computerlesbaren Virtualisierungsdaten überprüft und verändert werden. Hierzu werden die üblicherweise in der zur datentechnischen Virtualisierung genutzten Applikations-Software zur Verfügung stehenden Editier- oder Bearbeitungsfunktionalitäten verwendet. Anschließend kann der Vergleich dann wiederholt werden.

Bei einer zweckmäßigen Ausgestaltung der Erfindung kann vorgesehen sein, dass auf dem Speichermedium zusätzlich wenigstens ein Datensatz ausgewählt aus der folgenden Gruppe von Datensätzen einfach oder mehrfach gespeichert wird: die Multimedia-Rohdaten, im Format veränderte Version der Multimedia-Rohdaten, die bearbeiteten Multimediadaten und im Format veränderte Version der bearbeiteten Multimediadaten. Hierbei kann auch vorgesehen sein, dass die computerlesbaren Virtualisierungsdaten gemeinsam mit den Multimedia-Rohdaten und/oder den bearbeiteten Multimediadaten archiviert werden, was auch das Speichern in einem gemeinsamen Verzeichnis oder sogar in einem gemeinsamen Datensatz vorsehen kann.

Eine vorteilhafte Ausführungsform der Erfindung sieht vor, dass auf dem Speichermedium eine zwischen dem wenigstens einen Datensatz und den computerlesbaren Virtualisierungsdaten verweisende Zeigerinformation gespeichert wird. Mit Hilfe der verweisenden Zeigerinformation wird bei einer späteren Auswertung der gespeicherten Daten automatisch eine Beziehung zwischen den computerlesbaren Virtualisierungsdaten und dem wenigstens einen Datensatz, welcher in Beziehung zu den Multimedia-Rohdaten und/oder den bearbeiteten Multimediadaten steht, hergestellt. Dieses kann soweit gehen, dass bei einem Zugriff auf den wenigstens einen Datensatz in der aktuellen Betriebssystemumgebung automatisch die computerlesbaren Virtualisierungsdaten in eine Applikation in der aktuellen Betriebssystemumgebung geladen werden, um so dem Benutzer die Auswertung des wenigstens einen Datensatzes mit den Multimediadaten möglichst einfach zu erlauben.

Bevorzugt sieht eine Fortbildung der Erfindung vor, dass die computerlesbaren Virtualisierungsdaten wenigstens eine der folgenden Konfigurationsinformationen des genutzten Multimediadaten-Verarbeitungsprozess umfassend bereitstellen: Betriebsysteminformation, Versionsinformation zu genutzten Applikationsprogrammen, Geräteinformation und Zeitinformation. Die Detailgenauigkeit der virtuellen datentechnischen Abbildung des ursprünglich genutzten Multimediadaten-Verarbeitungsprozesses mit Hilfe der computerlesbaren Virtualisierungsdaten kann je nach Anwendung individuell gestaltet werden. Neben der Abfolge der ausgeführten Bearbeitungsschritte und Informationen über die im Rahmen der Bearbeitungsschritte verwendeten Datenbearbeitungsfunktionalitäten der eingesetzten Hardware- oder Softwareelemente können die computerlesbaren Virtualisierungsdaten auch ergänzende Informationen in elektronisch auswertbarer Form umfassen. Solche zusätzlichen Informationen können bei der späteren Auswertung der computerlesbaren Virtualisierungsdaten von der aktuellen Betriebssystemumgebung oder der hierin lauffähig installierten Applikation wahlweise herangezogen werden.

Bei einer vorteilhaften Ausgestaltung der Erfindung kann vorgesehen sein, dass die computerlesbaren Virtualisierungsdaten in eine geänderte Betriebssystemumgebung einer Datenverarbeitungseinrichtung geladen werden und mittels einer in der geänderten Betriebssystemumgebung lauffähigen Virtualisierungsapplikation aktualisierte, an die geänderte Betriebssystemumgebung angepasste und computerlesbare Virtualisierungsdaten erzeugt werden, in welche die computerlesbaren Virtualisierungsdaten eingebettet sind. Hierdurch ist es ermöglicht, die computerlesbaren Virtualisierungsdaten auf eine geänderte Betriebssystemumgebung umzustellen. Bildlich gesehen wird um ursprüngliche computerlesbare Virtualisierungsdaten eine weitere Virtualisierungsschicht gelegt, welche zwischen den ursprünglich computerlesbaren Virtualisierungsdaten und der geänderten Betriebssystemumgebung datentechnisch vermittelt. Ohne die ursprünglichen computerlesbaren Virtualisierungsdaten selbst substantiell zu verändern, wird die Archivierung geänderten datentechnischen Gegebenheiten angepasst.

### Zeichnung

Die Erfindung wird im folgenden anhand von Ausführungsbeispielen unter Bezugnahme auf Figuren einer Zeichnung näher erläutert. Hierbei zeigen:
- Fig. 1: eine schematische Blockdarstellung von Elementen eines Verarbeitungssystems zum Verarbeiten von Multimediadaten, wobei die Elemente in einem datentechnischen Netzwerk gebildet sind,
- Fig. 2: eine schematische Blockdarstellung der Elemente des Verarbeitungssystems nach Fig. 1 mit schematisch dargestellten Verarbeitungsschritten beim Verarbeiten von Multimedia-Rohdaten zu bearbeiteten Multimediadaten,
- Fig. 3: eine schematische Blockdarstellung einer virtuellen Abbildung (softwaremäßige Virtualisierung) des Verarbeitungssystems nach Fig. 1 in einem Host-System und
- Fig. 4: eine schematische Blockdarstellung des virtuell abgebildeten Verarbeitungssystems nach Fig. 3 in einem aktuellen Host-System.

### Ausführungsbeispiele

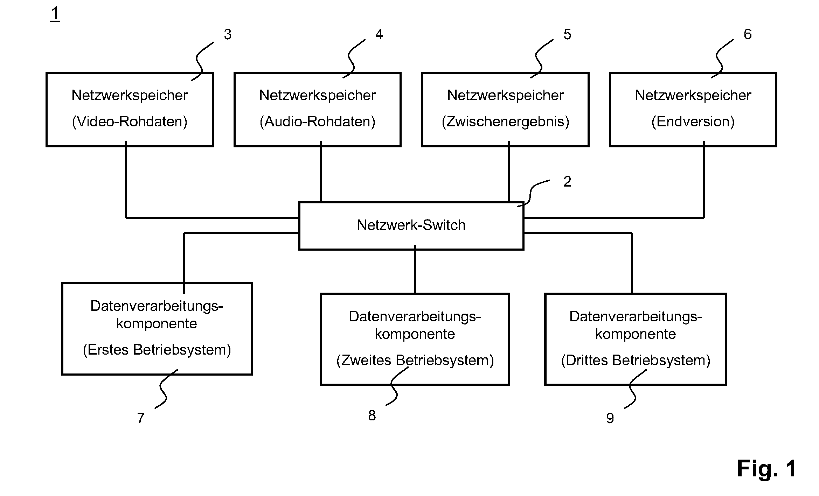

Fig. 1 zeigt eine schematische Blockdarstellung eines Verarbeitungssystems 1, bei dem mehrere zur datentechnischen Bearbeitung von Multimediadaten eingerichtete Elemente über einen Netzwerkschalter 2, welcher auch Netzwerk-Switch bezeichnet wird, in einem Datennetzwerk verbunden sind. Üblicherweise sind die Elemente des Verarbeitungssystems 1 als eine Kombination von Hardware- und Softwarekomponenten installiert. Mit Hilfe der Elemente des Verarbeitungssystems 1 können Multimediadaten, zum Beispiel Video- und Audiodaten, insbesondere empfangen, bearbeitet und gespeichert werden. Auch eine Zwischenspeicherung zum Zwecke einer nachfolgenden, weiteren Bearbeitung von Multimediadaten ist ermöglicht.

Die Ver- oder Bearbeitung der Multimediadaten kann beispielsweise der Nachbearbeitung einer ursprünglich aufgenommenen Filmsequenz oder eines aufgenommenen Musikstückes dienen. Bei der Nachbearbeitung von Filmaufnahmen ist es in diesem Zusammenhang üblich, dass Nachbearbeitungsschritte zunächst für einen Videodatensatz ausgeführt werden, welcher eine verminderte Auflösung für die Bilder aufweist. Solches Videodatenmaterial wird auch als *"proxy material"* bezeichnet. Das Durchführen der Bearbeitung an solchem Videomaterial ermöglicht es, den Bearbeitungsprozess zunächst an Videodaten mit verminderter Qualität auszuprobieren. Wenn der Bearbeitungsprozess dann in seiner Vollständigkeit festgelegt ist, kann dieser für die Videodaten mit vollständiger Auflösung und in bester Qualität ausgeführt werden. Der Bearbeitungsprozess von Multimediadaten ist durch eine Abfolge von Datenbearbeitungs- oder Datenverarbeitungsschritten charakterisiert, mit denen aus Multimedia-Rohdaten eine geänderte Datenmenge in Form bearbeiteter Multimediadaten erzeugt wird, die dann archiviert werden kann.

Bei dem in Fig. 1 dargestellten Ausführungsbeispiel des Verarbeitungssystems 1 für Multimediadaten sind ein Netzwerkspeicher 3 für Video-Rohdaten, ein Netzwerkspeicher 4 für Audio-Rohdaten, ein Netzwerkspeicher 5 zum Speichern von Zwischenergebnissen und schließlich ein Netzwerkspeicher 6 zum Speichern einer Endversion von bearbeiteten Multimediadaten vorgesehen. Die Netzwerkspeicher 3, ..., 6 sind über den Netzwerkschalter 2 datentechnisch an mehrere Datenverarbeitungseinrichtungen gekoppelt. Hierbei handelt es sich bei dem dargestellten Ausführungsbeispiel um eine Datenverarbeitungskomponente 7, auf der in einem ersten Betriebssystem eine Videodaten-Applikation installiert ist, eine Datenverarbeitungskomponente 8, auf welcher in einem zweiten Betriebssystem eine Audiodaten-Applikation lauffähig installiert ist, und eine Datenverarbeitungskomponente 9, auf der in einem dritten Betriebssystem eine Multimediadaten-Applikation implementiert ist. Die Betriebssysteme können alle verschieden sein. Es kann auch vorgesehen sein, dass wenigstens zwei der Betriebssysteme gleich sind.

Während die Netzwerkspeicher 3, ..., 6 im wesentlichen dazu dienen, jeweilige Daten zwecks Speicherung aufzunehmen, werden mit den Datenverarbeitungskomponenten 7, 8, 9 Multimediadaten im Rahmen der jeweils installierten Applikation bearbeitet und verändert. Die jeweils ausgeführten Bearbeitungsschritte können beispielsweise mit Hilfe von so genannten Skript-Dateien festgelegt werden. Mit Hilfe derartiger Dateien werden datentechnisch auszuführende Schrittfolgen definiert, die beim Aufruf der Skript-Datei unter Ausnutzung der in der zugehörigen Betriebssystemumgebung zur Verfügung stehenden Funktionalitäten eine Datenverarbeitung oder -bearbeitung ausführen.

Mit Hilfe des Verarbeitungssystems 1 kann beispielsweise die folgende Bearbeitung von Videodaten zur Herstellung eines HDTV-Filmes (HDTV - "*High Definition Television*") ausgeführt werden. Video-Rohdaten werden zunächst in dem Netzwerkspeicher 3 abgelegt. Zugehörige Audio-Rohdaten befinden sich in dem Netzwerkspeicher 4. Der Netzwerkspeicher 5 wird genutzt, um Zwischenergebnisse des Datenverarbeitungsprozesses zu speichern, und im Netzwerkspeicher 6 wird dann die Endversion der bearbeiteten Multimediadaten abgelegt.
Folgende Schritte sind vorgesehen:
- auf der Datenverarbeitungskomponente 7 mit dem ersten Betriebssystem:
   1. Vorbereiten einer Bearbeitungsschrittfolge S1 für die Video-Rohdaten mit verminderter Qualität unter Ausnutzung der Videodaten-Applikation.
   2. Ausführen der Bearbeitungsschrittfolge S1 für die Video-Rohdaten und Speichern des Zwischenergebnisses in dem Netzwerkspeicher 5.
- auf der Datenverarbeitungskomponente 8 mit dem zweiten Betriebssystem:
   1. Vorbereiten einer Bearbeitungsschrittfolge S2 für die Audio-Rohdaten unter Nutzung der Audiodaten-Applikation.
   2. Ausführen der Bearbeitungsschrittfolge S2 für die Audio-Rohdaten und Speichern des Zwischenergebnisses in dem Netzwerkspeicher 5.
- auf der Datenverarbeitungskomponente 9 mit dem dritten Betriebssystem:
   1. Vorbereiten einer Bearbeitungsschrittfolge S3 zum Herstellen einer Endversion der bearbeiteten Multimediadaten aus den Zwischenergebnissen in dem Netzwerkspeicher 5 unter Nutzung der Multimediadaten-Applikation.
   2. Ausführen der Bearbeitungsschrittfolge S3, indem die Zwischenergebnisse aus dem Netzwerkspeicher 5 bearbeitet werden, um den HDTV-Film herzustellen, und Speichern der so hergestellten Endversion der bearbeiteten Multimediadaten in dem Netzwerkspeicher 6.

Die Bearbeitungsschrittfolgen S1, S2 und S3 bilden in ihrer Gesamtheit Arbeitsschritte eines Multimediadaten-Verarbeitungsprozesses, mit dem eine Endversion von bearbeiteten Multimediadaten erzeugt wird. Wenn diese einzelnen Bearbeitungsschrittfolgen erzeugt sind, kann das Herstellen der Endversion der bearbeiteten Multimediadaten, beispielsweise des HDTV-Filmes, automatisch ausgeführt werden, indem eine Bearbeitungsschrittfolge S4 auf der Datenverarbeitungskomponente 7 mit dem ersten Betriebssystem wie folgt ausgeführt wird:
- Bearbeitungsschrittfolge S4 auf der Datenverarbeitungskomponente 7:
   1. Verbinden des Netzwerkspeichers 3 und des Netzwerkspeichers 5 mit der Datenverarbeitungskomponente 7.
   2. Ausführen der Bearbeitungsschrittfolge S1 auf der Datenverarbeitungskomponente 7.
   3. Verbinden des Netzwerkspeichers 4 und des Netzwerkspeichers 5 mit der Datenverarbeitungskomponente 8.
   4. Ausführen der Bearbeitungsschrittfolge S2 auf der Datenverarbeitungskomponente 8.
   5. Verbinden des Netzwerkspeichers 5 und des Netzwerkspeichers 6 mit der Datenverarbeitungskomponente 9.
   6. Ausführen der Bearbeitungsschrittfolge S3 auf der Datenverarbeitungskomponente 9.

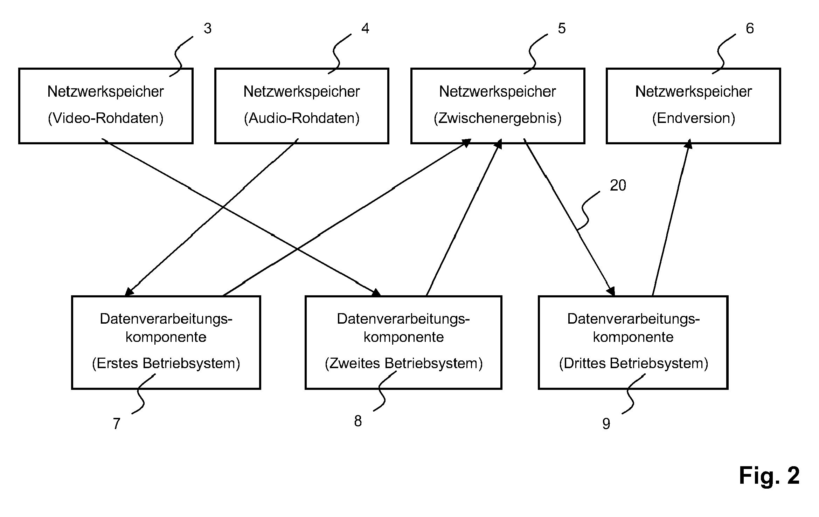

Fig. 2 zeigt eine schematische Blockdarstellung des Verarbeitungssystems 1, wobei die vorangehend beschriebenen Arbeitsschritte mittels Pfeilen 20 schematisch gezeigt sind.

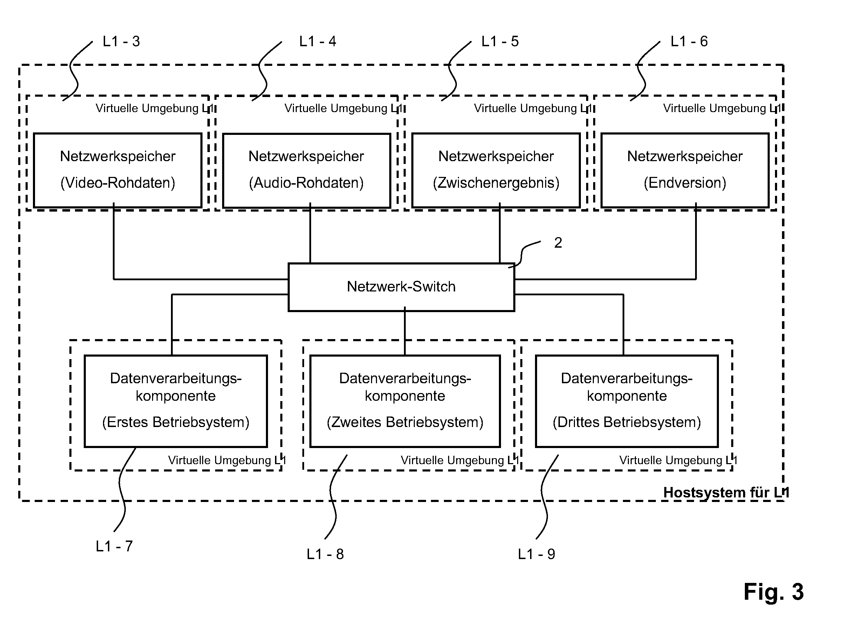

Fig. 3 zeigt nun eine schematische Blockdarstellung einer softwarebasiert ausführbaren, virtualisierenden Abbildung des Verarbeitungssystems 1 mit Hilfe einer Virtualisierungs-Applikation, wie sie in verschiedenen Ausführungen für unterschiedliche Betriebssysteme von Datenverarbeitungseinrichtungen bekannt sind. Eine gegenwärtig hierfür nutzbare Software-Applikation trägt die Bezeichnung *"Parallels".* Die Virtualisierung ist in Fig. 3 zusammenfassend mit L1 bezeichnet.

Bei dem hier beschriebenen Ausführungsbeispiel sei angenommen, dass die Virtualisierung des Verarbeitungssystems 1 und der für das Herstellen des HDTV-Filmes genutzten Datenverarbeitungs- oder Datenbearbeitungsschritte in einer Plattform des ersten Betriebssystems erfolgt, welches bei dem hier gewählten Ausführungsbeispiel auch auf der Datenverarbeitungskomponente 7 genutzt wird. Das erste Betriebssystem wird als ein Host-System für die Virtualisierung L1 genutzt, welches seinerseits eine datentechnische Umgebung nicht nur für das erste Betriebssystem sondern auch für das zweite Betriebssystem und das dritte Betriebssystem bildet, die auf der Datenverarbeitungskomponente 8 und der Datenverarbeitungskomponente 9 genutzt werden, was auch als "hosting" bezeichnet wird.

Die in Fig. 3 dargestellte Virtualisierung L1 des vorangehend beschriebene Multimediadaten-Verarbeitungsprozesses beinhaltet alle genutzten Werkzeuge und Applikationen für die Bearbeitung der Audio- und der Videodaten in dem Verarbeitungssystem 1. Der Datenaustausch zwischen verschiedenen virtuellen Systemen wird üblicherweise mittels eines virtuellen Netzwerkes realisiert, welches diese Systeme verbindet und welches aus einem virtuellen System heraus als eine reale Netzwerkumgebung gesehen wird.

In der Virtualisierung L1 kann der oben beschriebene Multimediadaten-Verarbeitungsprozess zur Herstellung des HDTV-Filmes einfach ausgeführt werden, indem die Bearbeitungsschrittfolge S4 auf der virtuell abgebildeten Datenverarbeitungskomponente L1-7 in dem Host-System gestartet wird. Der zuvor beschriebene, reale Verarbeitungsprozess wird dann in dem Host-System der softwaremäßigen Virtualisierung L1 entsprechend nachgebildet. Das Ergebnis in Form bearbeiteter Multimediadaten in dem virtuellen Netzwerkspeicher L1-6 kann dann mit den bearbeiteten Multimediadaten verglichen werden, die in dem oben beschriebenen Prozess in dem Netzwerkspeicher 7 abgelegt wurden. Falls Abweichungen bestehen, kann die virtuelle Abbildung des Multimediadaten-Bearbeitungsprozesses geändert werden.

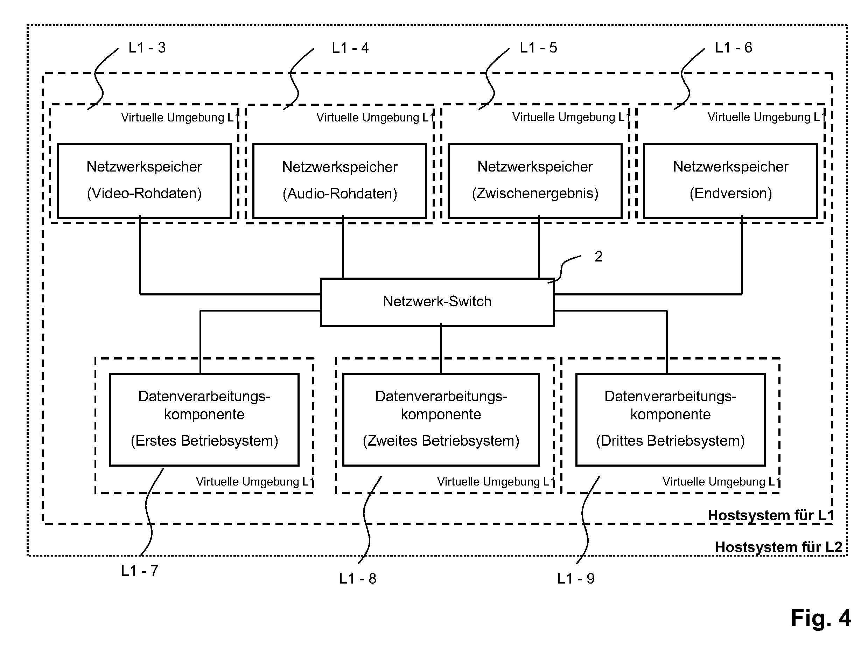

Fig. 4 zeigt eine schematische Blockdarstellung der virtuellen Umgebung L1 in einem anderen Host-System, in dem eine sich von der virtuellen Umgebung L1 unterscheidende, virtuelle Umgebung L2 implementiert ist. Eingebettet in die virtuelle Umgebung L2 kann die ursprünglich softwaremäßig erstellte, virtuelle Umgebung L1 genutzt werden, um den oben beschriebenen Multimediadaten-Verarbeitungsprozess ablaufen zu lassen. Auf diese Weise sind eine Nutzung und eine Anpassung der Virtualisierungsdaten auch in neuen oder geänderten Betriebssystemumgebungen ermöglicht. In einer solchen neuen oder geänderten Betriebssystemumgebung können dann auch zu diesem Zeitpunkt zur Verfügung stehende, neue Applikationen für die Multimediadaten-Bearbeitung genutzt werden.

Die in der vorstehenden Beschreibung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Archivieren elektronischer Daten in einer Multimediadaten-Anwendung, bei dem computerlesbare Virtualisierungsdaten, die einen beim Erzeugen von bearbeiteten Multimediadaten aus Multimedia-Rohdaten genutzten Multimediadaten-Verarbeitungsprozess virtuell abbilden, bereitgestellt werden und die computerlesbaren Virtualisierungsdaten auf einem Speichermedium mittels Speichern archiviert werden, wobei die computerlesbaren Virtualisierungsdaten konfiguriert sind, beim Laden von dem Speichermedium in eine Betriebssystemumgebung einer Datenverarbeitungseinrichtung im Rahmen einer in der Betriebssystemumgebung lauffähigen Applikation die folgenden Schritte auszuführen: Empfangen der Multimedia-Rohdaten, Verarbeiten der empfangenen Multimedia-Rohdaten gemäß des Multimediadaten-Verarbeitungsprozesses zu den bearbeiteten Multimediadaten entsprechenden Multimediadaten und Bereitstellen der entsprechenden Multimediadaten.

2. Verfahren nach Anspruch 1, **dadurch gekennzeichnet, dass** die bereitgestellten, computerlesbaren Virtualisierungsdaten vor dem archivierenden Speichern geprüft werden, indem die computerlesbaren Virtualisierungsdaten in eine Betriebssystemumgebung einer prüfenden Datenverarbeitungseinrichtung geladen werden und in der prüfenden Datenverarbeitungseinrichtung mittels eines den geladenen Virtualisierungsdaten entsprechenden Multimediadaten-Verarbeitungsprozesses den Multimedia-Rohdaten gleichende Multimedia-Prüfrohdaten verarbeitet werden zu Prüfmultimediadaten und die Prüfmultimediadaten mit den bearbeiteten Multimediadaten verglichen werden.

3. Verfahren nach Anspruch 1 oder 2, **dadurch gekennzeichnet, dass** auf dem Speichermedium zusätzlich wenigstens ein Datensatz ausgewählt aus der folgenden Gruppe von Datensätzen einfach oder mehrfach gespeichert wird: die Multimedia-Rohdaten, im Format veränderte Version der Multimedia-Rohdaten, die bearbeiteten Multimediadaten und im Format veränderte Version der bearbeiteten Multimediadaten.

4. Verfahren nach Anspruch 3, **dadurch gekennzeichnet, dass** auf dem Speichermedium eine zwischen dem wenigstens einen Datensatz und den computerlesbare Virtualisierungsdaten verweisende Zeigerinformation gespeichert wird.

5. Verfahren nach einem der vorangehenden Ansprüche, **dadurch gekennzeichnet, dass** die computerlesbaren Virtualisierungsdaten wenigstens eine der folgenden Konfigurationsinformationen des genutzten Multimediadaten-Verarbeitungsprozess umfassend bereitgestellt werden: Betriebsysteminformation, Versionsinformation zu genutzten Applikationsprogrammen, Geräteinformation und Zeitinformation.

6. Verfahren nach einem der vorangehenden Ansprüche, **dadurch gekennzeichnet, dass** die computerlesbaren Virtualisierungsdaten in eine geänderte Betriebssystemumgebung einer Datenverarbeitungseinrichtung geladen werden und mittels einer in der geänderten Betriebssystemumgebung lauffähigen Virtualisierungsapplikation aktualisierte, an die geänderte Betriebssystemumgebung angepasste und computerlesbare Virtualisierungsdaten erzeugt werden, in welche die computerlesbaren Virtualisierungsdaten eingebettet sind.

7. Computerlesbares Speichermedium mit hierauf gespeicherten, einen beim Erzeugen von bearbeiteten Multimediadaten aus Multimedia-Rohdaten genutzten Multimediadaten-Verarbeitungsprozess virtuell abbildenden, computerlesbaren Virtualisierungsdaten, die konfiguriert sind, beim Laden in eine Betriebssystemumgebung einer Datenverarbeitungseinrichtung im Rahmen einer in der Betriebssystemumgebung lauffähigen Applikation die folgenden Schritte auszuführen: Empfangen der Multimedia-Rohdaten, Verarbeiten der empfangenen Multimedia-Rohdaten zu den bearbeiteten Multimediadaten entsprechenden Multimediadaten und Bereitstellen der entsprechenden Multimediadaten.

8. Datenverarbeitungssystem zum Bearbeiten von Multimediadaten, mit einer in einer implementierten Betriebssystemumgebung lauffähig installierten Applikation, die konfiguriert ist, nach dem Laden von computerlesbaren Virtualisierungsdaten, welche einen beim Erzeugen von bearbeiteten Multimediadaten aus Multimedia-Rohdaten genutzten Multimediadaten-Verarbeitungsprozess virtuell abbildend ausgeführt sind, die Multimedia-Rohdaten zu empfangen und den computerlesbaren Virtualisierungsdaten entsprechend zu den bearbeiteten Multimediadaten zu verarbeiten.
